# EUROPEAN PATENT SPECIFICATION

(11) **EP 1 640 088 B1**
(45) Date of publication and mention of the grant of the patent: **18.03.2009**
(21) Application number: 05109797.0
(22) Date of filing: 08.10.1999
(51) Int. Cl.: B22D 25/04, B22D 27/11, B22D 27/15, B22D 17/14

(54) **Pressure castings of battery terminals**
Druckgiessen von Batterieklemmen
Coulée sous pression de bornes de batterie

(30) Priority: 13.10.1998 US 170247; 10.12.1998 US 208795; 27.05.1999 US 321776
(43) Date of publication of application: 29.03.2006
(62) Divisional of application: 99119905.0
(73) Proprietor: WATER GREMLIN COMPANY, White Bear Lake, MN 55110 (US)
(72) Inventor: Ratte, Robert W., North Oaks, MN 55127 (US)
(74) Representative: Modiano, Micaela Nadia

(56) References cited:
- EP-A- 0 559 920
- EP-A- 0 633 081
- US-A- 5 048 590
- PATENT ABSTRACTS OF JAPAN vol. 014, no. 407 (M-1019), 4 September 1990 (1990-09-04) & JP 02 155557 A (TOYOTA MOTOR CORP), 14 June 1990 (1990-06-14)

## Description

### FIELD OF THE INVENTION

This invention relates generally to pressure casting of lead articles such as battery terminals.

U.S. Patent no. 5,048,590 A discloses gravity casting of battery terminals from molten lead alloys combined with reducing the volume of the mould cavity by forcing a punch therein.

### SUMMARY OF THE INVENTION

The present invention relates to a method of pressure casting a lead battery terminal which inhibits the formation of cracks and tears as defined in claim 1.

In one intensification mode state the state of molten lead can be monitored so that when the molten lead enters a transformation stage from liquid-to-solid, the volume of the mold available for the lead to solidify therein is quickly reduced to thereby cause the molten lead to flow into the remaining volume while one maintain pressures on the molten lead. As the molten lead solidifies under the reduced volume and pressure, it produces a battery terminal that is substantially free of both tears and cracks. In another intensification mode state the battery terminal is allowed to solidify in the mold, but before removal of the battery terminal from the mold a piston is driven into the battery terminal with sufficient force so as to at least partially cold form a portion of the battery terminal to thereby produce a battery terminal that is free of cracks and tears. In a further intensification mode state of the invention the mold is sealed off while the molten lead is in a molten state and the pressure of the molten lead is increased and maintained until the molten lead solidifies.

### BRIEF DESCRIPTION OF THE DRAWINGS

Figure 1 is a partial schematic of a system for pressure casting of a battery terminal to inhibit the cracking or tearing of the battery terminal during the solidification process;
Figure 2 is a diagram showing a portion of the mold and the piston that is driven into the runner of the mold;
Figure 3 shows a portion of the system of Figure 1 with the piston in the extended position that produces a reduced volume for the solidification of a lead or lead alloy;
Figure 4 shows an alternate system wherein a piston is maintained under pressure during the casting process;
Figure 5 is a cross-sectional view showing a portion of a mold and a piston that is positioned having its end surface at the end surface of the mold cavity during the pressure casting process;
Figure 6 is a cross-sectional view of Figure 5 showing the piston driven into the battery terminal to deform the metal into a shape free of cracks and tears;
Figure 7 is a cross-sectional view showing a portion of a mold and a piston that is positioned having its end surface spaced from the end surface of the mold cavity during the pressure casting process;
Figure 8 is a cross-sectional view of Figure 7 showing the end of the piston driven up to the end surface of the mold cavity to deform the metal into a shape free of cracks and tears;
Figure 9 is a cross-sectional view showing a portion of a mold and a piston that is positioned having its end surface spaced from the end surface of the mold cavity during the pressure casting process;
Figure 10 is a cross-sectional view of Figure 9 showing the end of the piston driven to a condition spaced from the end surface of the mold cavity to deform the metal into a shape free of cracks and tears;
Figure 11 is a view of a battery terminal of Figure 10 with the pressure cast extension being sheared off;
Figure 12 is a partial cross-sectional view of the piston of Figure 10 driving the sheared pressure cast extension from the mold cavity;
Figure 13 is a front view of a two-metal battery connector;
Figure 14 is a cross-sectional view taken along lines 14-14 of Figure 13;
Figure 15 is cross-sectional view of a mold and holding apparatus for pressure casting the battery connector of Figure 13;
Figure 16 is cross-sectional view of a mold and holding apparatus of Figure 15 with a pair of holding pins in the retracted position and the driving pins in the extended position;
Figure 17 is a cross-sectional view of a pressure cast battery part with an extension pressure cast on the end of the battery with the length of the extension limited by the end of an annular drive punch;
Figure 18 shows the battery part of Figure 17 with the annular drive punch driven into the extension to cold form the battery part free of cracks and voids; and
Figure 19 shows a mold with a core pin and slidable collar for pressure casting a battery part and volume contraction of the battery part to provide a battery part free of cracks and tears.
Figure 20 shows a partial schematic of my closed system for pressure casting lead articles while maintaining the molten lead in a molten state;
Figure 21 shows a housing and a mold with a shut-off valve having a retractable member in a closed condition with a cavity in the mold housing to be filled with molten lead;
Figure 22 shows a housing and mold of Figure 21 with the retractable member in a open condition to allow a cavity in the mold housing to be filled with molten lead;
Figure 23 shows a housing and mold of Figure 21 with the retractable member in a closed condition and a solidified part in the mold cavity;
Figure 24 shows an alternate embodiment of Figure 21 wherein the mold is spaced from the housing as the molten lead solidifies;
Figure 25 shows the embodiment of Figure 24 wherein the mold is engaged with the housing so that molten lead can be transferred to the mold;
Figure 26 shows the embodiment of Figure 24 wherein the mold cavity is in fluid communication and physical contact with the housing and the retractable member is retracted to allow molten lead to flow into the mold cavity;
Figure 27 shows the embodiment of Figure 24 wherein the molten lead in the mold has solidified;
Figure 28 shows the embodiment of Figure 24 wherein the mold has been separated from the housing to minimize heat transfer to the mold from the housing;
Figure 29 shows a partial cross-sectional view of the mechanism for providing a source of pressurizeable lead located in an pre-pressurizing position;
Figure 30 shows a partial cross-sectional view of the mechanism for providing a source of pressurizeable lead located in the pressurizing position;
Figure 31 shows a partial cross-sectional view of the mechanism for providing a source of pressurizeable lead located in a negative pressure position; and
Figure 32 shows a partial cross-sectional view of the mechanism for providing a source of pressurizeable lead located in a position for drawing a fresh charge of molten lead into the closed system.

### DESCRIPTION OF THE PREFERRED EMBODIMENT

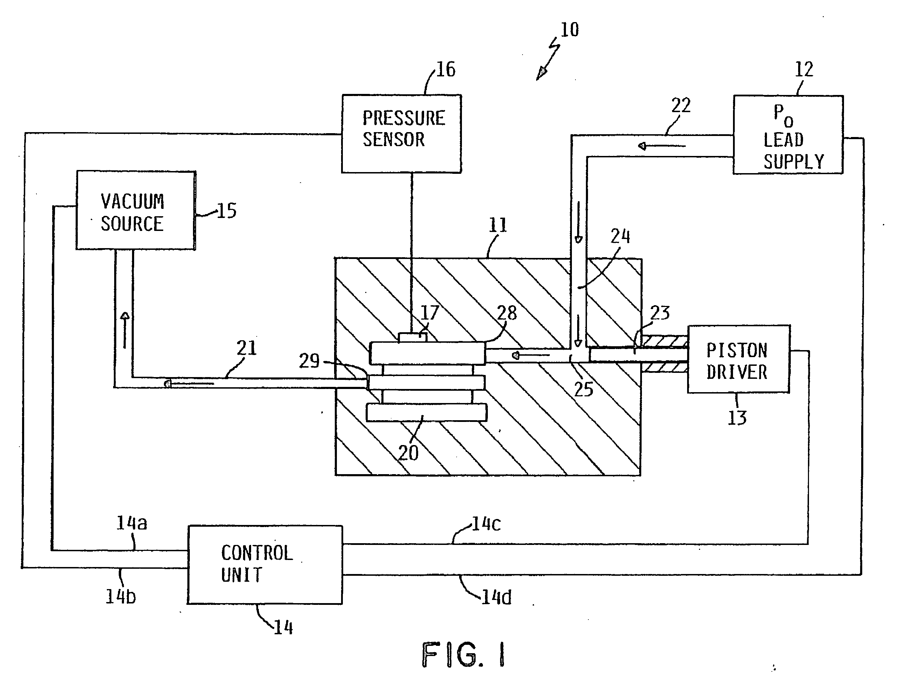

Referring to Figure 1, reference numeral 10 generally identifies a system for pressure casting of a battery terminal or battery part to inhibit formation of cracks and tears in the pressure cast battery terminal or battery part. The system 10 incudes a source of pressurized molten lead 12 (which could be a source of pressurized alloy of lead) for directing molten lead under pressure into a mold 11. Mold 11 has a battery terminal cavity 20 located therein with a runner 24 extending therefrom for supplying molten pressurized lead from pressurized lead source 12 to battery terminal cavity 20.

System 10 includes a vacuum source 15 which is connected to a cold spot i.e. a spot that cools at a rapid rate and cools before the rest of the molten metal in the battery terminal cavity 20. This enables the vacuum source 15 to evacuate the air from battery terminal cavity 20 through passage 21 prior to supplying molten lead to the battery terminal cavity 20.

System 10 also includes a pressure sensor 16 having a probe 17 mounted in mold 11 with probe 17 mounted in position to form a portion of the mold surface surrounding the battery terminal cavity 20. Pressure sensor probe 17 is preferably placed in a hot spot of the mold, i.e. a spot that cools at a slower rate. By placing the probe 17 in a portion of the mold that remains in a liquid state, one can monitor the pressure of the molten lead in the liquid state as the molten lead is supplied to battery terminal cavity 20.

Located in slideable relationship in passage 25 is a cylindrical piston 23 for driving into runner passage 25 of mold 11. A piston driver 13, which carries piston 23 connects to mold 11 to hold piston 23 in an out of the way condition as molten lead is being forced into battery terminal cavity 20. Piston 23 provides a mechanical means for reducing the volume available for solidification of the lead therein.

In order to control the operation of system 10, a control unit 14 is included with system 10. Control unit 14 connects to vacuum source 15 via electrical lead 14a and to pressure sensor 16 via electrical lead 14b. Similarly, control unit 14 connects to molten lead supply 12 through electrical lead 14d and to piston driver 13 through electrical lead 14c.

The control unit 14, which can be a computer with appropriate software, receives signals from pressure sensor 16, which transmits the pressure of the molten lead in battery terminal cavity 20. That is, as the molten lead from the pressurized lead source 12 fills the battery terminal cavity 20, the pressure on probe 17 is continually transmitted to pressure sensor 16 and onward to control unit 14. When the pressure in battery terminal cavity 20 reaches a predetermined level, control unit 14 sends a signal to piston driver 13 through electrical lead 14c which quickly drives piston 23 into passage 25 to simultaneously cutoff and seal passage 25 to prevent continued lead flow from runner 24. As piston 23 plunges into the passage, it reduces the volume for the lead that is in the liquid-to-solid transformation stage. By reducing the volume of the lead during the liquid-to-solid transformation stage, one can compensate for the lead shrinking and contracting as the molten lead solidifies. Consequently, the finished cast product is free of the tears and cracks that would have a detrimental effect on the performance of the battery terminal.

The system of Figure 1 is described with respect to volume shrinkage during the liquid-to-solid transformation stage; however, the system of Figure 1 can also be used with the method of volume shrinkage when the molten lead is in the molten state. If the pressure of the molten lead is to be increased the vacuum source connected to the mold is sealed off while the lead is in the molten state. This leaves a closed mold with liquid molten metal having substantially the same pressure throughout the mold. Next, with the pressure of the molten lead being maintained by the source of pressurized lead 22 a piston 23 is driven inward to simultaneously shut off the supply of further molten lead while at the same time substantially increasing the liquid pressure throughout the mold. By increasing the pressure of the molten lead sufficiently the molten lead can solidify into a part free of cracks and tears. This process may not be used with all types of molds as it may not be feasible to build a mold to withstand the required high pressures throughout the mold. The required pressure of the molten lead to achieve a battery part free of cracks and tears will to a certain extend depend on the shape of the battery part and can be readily determined through trial and error.

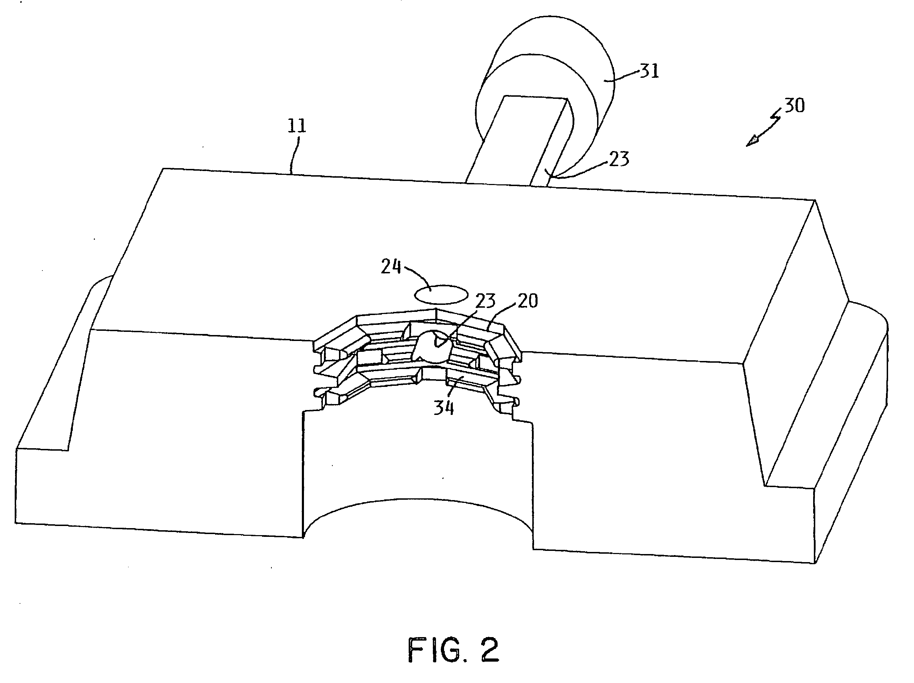

Referring to Figure 2, mold 11 has been opened to reveal a portion of mold 11 and piston 23 which are shown in perspective view in relation to a portion of battery terminal cavity 20. Extending out of one side of mold 11 is piston 23 having a head 31 for engagement with a hydraulic cylinder or the like. Battery terminal cavity 20 is defined by a set of radial fins 34 that project into the battery terminal cavity 20.

With system 10 one can pressure cast a lead battery terminal to inhibit formation of tears and cracks in the battery terminal. In order to inhibit the formation of tears and cracks in the cast battery terminal, the state of molten lead is continuously monitored so that when the molten lead enters the liquid-to-solid transformation stage, the volume of the mold available for the lead to solidify therein can be quickly reduced to force the lead, while it is still flowable, into the smaller volume. By rapidly reducing the volume and maintaining pressure on the molten lead during the critical liquid-to-solid transformation stage, one causes the molten lead to solidify as a solid terminal or battery part substantially free of tears and cracks. It should be pointed out that in the liquid-to-solid transformation stage, the lead is in a condition where it can flow and is sometimes referred to as a "mush". Normally, as the molten lead goes through the liquid-to-solid transformation stage, the volume of lead contracts which results in a finished product that will have cracks or tears when it is completely solidified. The step of volume contraction at the moment when the lead is in the liquid-to-solid transformation stage produces a battery part when cooled that is substantially free of cracks and tears. This procedure is particularly useful where the battery cavity may have an unusual shape as the pressure produced by volume contraction can be transmitted throughout the part to produce sufficient pressure to prevent the formation of cracks and tears in the battery part.

Referring to Figure 1 to illustrate the operation of system 10, the mold 11 is assembled with the battery terminal cavity 20 located within the mold. One end of a vacuum conduit 21 is attached to vacuum source 15, and the other end of vacuum conduit 21 is attached to a location on the mold 11 which is referred to as a "cold spot". That is, the lead in this portion of the mold is referred to as a "cold spot" as the molten lead in this region will solidify sooner than the molten lead being fed into the mold through runner passage 25. Consequently, as the lead begins to solidify in the "cold spot" the solidified lead immediately closes the end of conduit 21 which prevents molten lead from being drawn into the vacuum source 15. The location of a cold spot or cold spots will vary depending on the shape and size of the casting. For any particular shape battery casting, one can generally determine the cold spots by determining the regions of the mold that are less massive than others. If needed, one can also determine the cold spot through trial and error.

In addition to the position of a vacuum passage in mold 11, one places a pressure probe 17 on the surface boundary of the battery mold cavity 20 in order to determine when the molten lead is in the liquid-to-solid transformation stage. While the temperature could be measured to determine when the lead reaches the liquid-to-solid transformation stage, the time lag between the actual temperature of the lead and the measured temperature may be sufficiently long so that the actual temperature of the molten lead may have cooled sufficiently so the lead is no longer in the liquid-to-solid transformation stage even though the temperature probe indicates that the temperature of the lead is in the liquid-to-solid transformation stage. However, by measuring the pressure using a pressure probe, one is able to obtain a pressure reading which can more quickly determine when the molten lead enters the liquid-to-solid transformation stage. By being able to more quickly determine the molten state of the lead, one still has sufficient time to active the piston driver 13 to drive the piston 23 into the molten lead and force the molten lead to flow into a reduced volume before the molten lead passes completely through the liquid-to-solid transformation stage.

With the system 10 in the condition shown in Figure 1, the control unit 14 can activate the molten lead supply to deliver molten lead under pressures of 40,000 psi or higher to deliver molten lead to pipe 22 which delivers the molten lead under pressure to runner 24. The molten lead flows in the directions indicated by the arrows in runners 24 and 25. Note, in this condition piston 23 is located behind runner 24 so that molten lead flows from runner 24 to runner 25 and into battery terminal cavity 20. While the molten lead is flowing into battery terminal cavity 20, the vacuum source is removing air from battery terminal cavity 20 with the air flowing through vacuum source 15 as indicated by arrow in conduit 21. As previously mentioned, air evacuation conduit 21 terminates at a cold spot indicated by reference numeral 29 while the molten lead enter battery terminal cavity at what is considered a hot spot 28, i.e. an area where the lead solidifies last

Once the molten lead enters the battery terminal cavity 20, the molten lead fills up the battery terminal cavity and the lead in the cold spot 29 begins to solidify thereby preventing further molten lead from being drawn out of the mold and into conduit 21. It should be pointed out that the size of the opening in the cold spot is kept sufficiently small so that the molten lead will solidify and quickly fill the open end of conduit 21, yet the conduit 21 is sufficiently large so that the air can quickly be evacuated from the battery terminal cavity 20.

As the vacuum passage 21 is sealed off, the pressure in the battery terminal cavity 20 begins to rise under the pressure of the molten lead supply. When the pressure reaches a predetermined level, which can be determined by the shape and size of the battery terminal being cast, the control unit 14 senses the pressure and sends a signal to piston driver 13. Piston driver 13 includes a quick action hydraulic cylinder or the like which quickly fires piston 23 foreword, which simultaneously cuts off the supply of additional molten lead from runner 24, while reducing the volume in which the lead will solidify.

If desired, the decrease in volume can be determined based on trial and error. That is, by observing the finished product for cracks and tears, one can determine if more volume reduction is necessary as insufficient volume reduction of the lead or lead alloy leaves cracks and tears in the finished battery terminal.

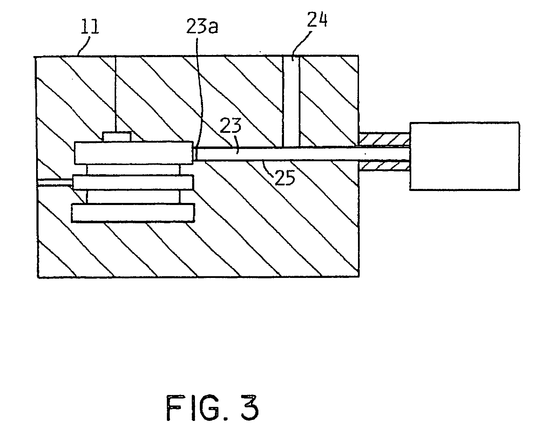

Figure 3 shows a portion of system 10 with mold 11. In the condition shown in Figure 3 the piston 23 has been driven into the passage 25 thereby cutting off the flow of additional molten lead through runner 24. At the same time the end of piston 23 has forced the molten lead in passage 25 into the mold by pushing the molten lead ahead of end 23a of piston 23. Thus the volume for molten lead to solidify therein has been decreased by forcing the piston end 23a proximate the battery terminal cavity 20. In the preferred method, the piston end 23a is driven to the outer confines of the battery terminal cavity 20 thereby eliminating a protrusion on the battery casting. That is, the end 23a, when in the piston shown in Figure 3 defines the end of a portion of the battery terminal being cast therein.

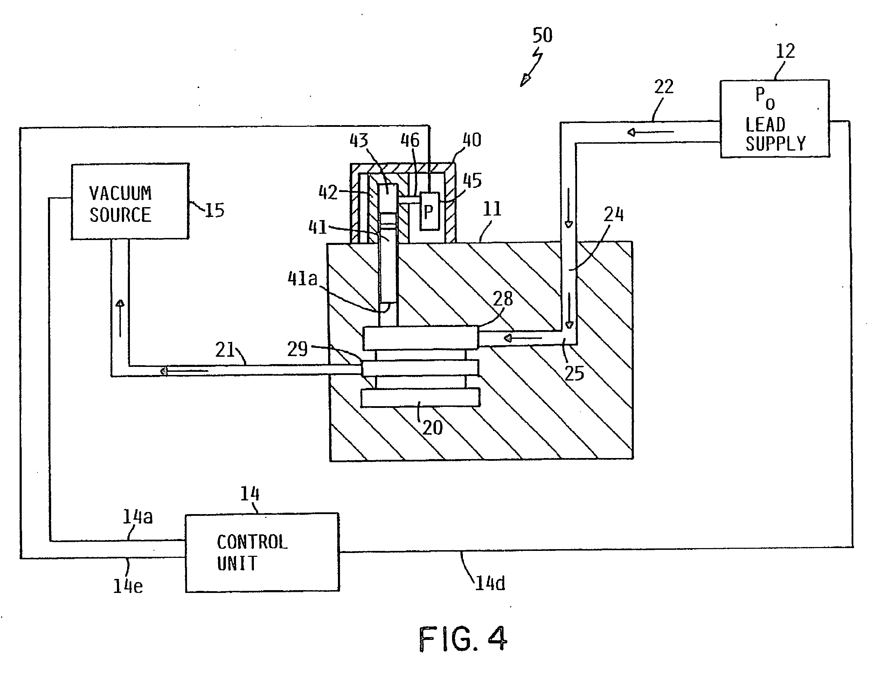

Figure 4 shows an alternate embodiment of my system that uses a piston 41 that is maintained under a predetermined pressure. The components of system 50 that are identical to the components in system 10 are shown with identical numbers. System 50 includes a housing 40 which is secured to mold 11. Housing 40 includes a cylinder 42 that has a slidable piston 41. located therein. A chamber 43 is located above the top end of piston 41. A high pressure source 45 connects to chamber 43 though conduit 46. The control for high pressure 45 source comes from control unit 14 and through lead 14e. Piston 41 is shown in the slightly elevated condition and during the course of its operation the lower end 41a of piston 41 will move from a position flush with the surface of the battery terminal casting 20 to a position above the battery terminal casting 20 (shown in Figure 4) and eventually again to a position where end 41a is flush with the surface of the lead battery terminal casting 20.

In the embodiment shown in Figure 4, the piston 41 is positioned in a hot spot in the mold. The lead is then injected under pressure into mold 28 though runner 24. During this stage of the molding process the injection pressure of the lead builds to a level where the pressure of the lead in the mold is sufficient to force piston 41 upward as shown in Figure 4. As the mold begins to cool and the supply of lead to the battery terminal cavity is terminated, the pressure in the battery terminal cavity 20 begins to decrease. As the pressure in the mold decreases, it reaches a point where the pressure forces on the top end of piston 41 become greater than the pressure forces on the bottom end 41a of piston 41. In this condition piston 41 is driven downward by the pressurized air in chamber 43 causing the volume available for the lead to solidify in to be reduced. As long as the piston 41 is located in a hot spot on the mold, the lead is forced into a smaller volume as it solidifies. Consequently, the reduction of volume causes the battery casting formed therefrom to be formed substantially free of cracks. If desired, one can ensure that the lead does not solidify in the area where the piston contacts the molten the piston by maintaining a temperature of the piston in excess of the molten lead in the mold.

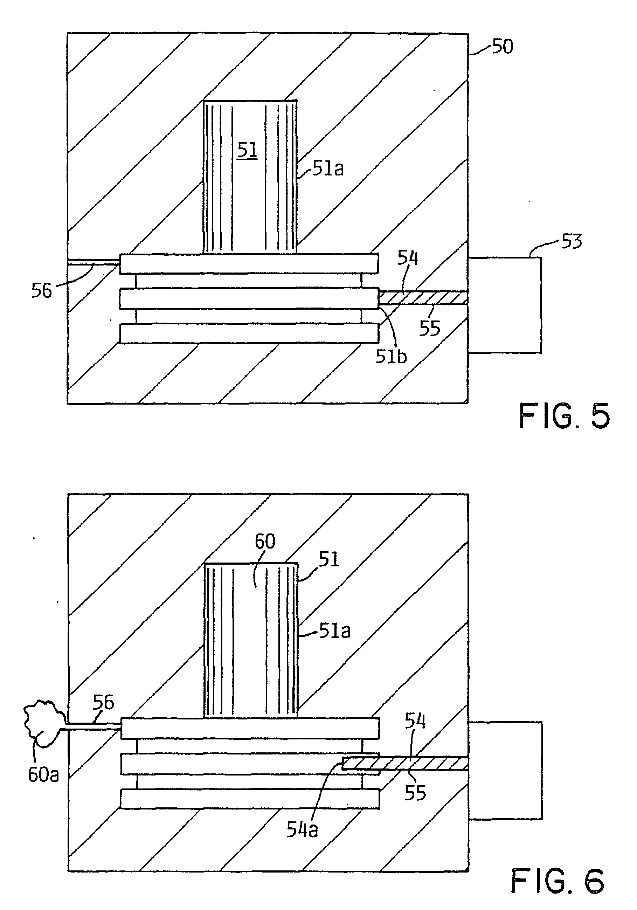

Figure 5 is a cross-sectional view showing a portion of a mold 50 in cross section. A battery terminal cavity 51 is shown therein having an upper cylindrical electrical contact surface 51a and a lower non-electrical contact surface 51b. The electrical contact surface is defined as the surface of the battery terminal that is mechanically clamped to a battery cable to transmit electrical energy from the battery terminal to the battery cable. The non-electrical contact surface 51b is the surface of the battery terminal that is either connected to the battery casing, remains free of contact with another part or is fused to another battery part, Generally, the electrical contact surface should have a smooth and continuous finish for mechanically engaging a battery clamp thereto while smoothness and continuous of the non-electrical contact surface is less critical because there are no mechanical connections thereto. Mold 50 includes a blow hole or vent passage 56 for removing air from the battery mold cavity. Depending upon the conditions of molding, a vacuum source could be connected thereto to remove air more rapidly. A cylindrical piston 54 is positioned in a cylindrical passage with the piston 54 having an end source 51b flush with the surface of the non-electrical contact surface of the mold cavity during the pressure casting process. A piston driver 53 is positioned proximate the mold 50 and includes therein means (not shown) for driving the piston 54 toward the battery terminal cavity 51 or for retracting the piston 54 away from the battery terminal cavity.

Figure 6 is a cross-sectional view of the mold in Figure 5 showing a solidified battery terminal 60 located in battery cavity 51. The piston 54 has been driven into the solidified battery terminal 60 with sufficient force so as to at least partially cold form the solidified lead into a battery terminal which is free of cracks and tears. That is, the end of piston 54a is shown penetrating into the batter terminal to decrease'the volume of the battery terminal cavity while at the same time mechanically deforming at a least a portion of the battery terminal 60 located therein. In the embodiment shown, the mechanical pressure is sufficient to force solidified lead through passage 56 and out of mold 50 as indicated by solidified lead 60a extending from vent passage 56. Thus, one can pressure cast a battery part and allow the pressure cast battery part to solidify and while the battery part is still in the mold but in the solidified state a piston can be driven into the solidified part to mechanically deform the lead which will remove cracks or tears in the battery terminal that occur as a result of the pressure casting process. Figure 6 shows that the piston can be driven into the battery terminal 60 to leave a recess within the battery terminal. As the piston is driven into the portion of the battery terminal that contains the non-electrical contact surface, a feature such as a recess can be tolerated thereon without adverse conditions for operation of the battery terminal. This procedure of volume contraction is suitable when the battery part has a shape so that the volume contraction can cause the deformation of the lead in remote portions of the battery part. That is, in some battery parts the configuration of the battery part may be such that a volume reduction in one region produces only partial cold deformation or reworking the battery part thereby leaving a battery part with a crack or tear. However, in those battery parts where the cold deformation can effectively move metal throughout the battery cavity the volume contraction can be performed after the solidification of the battery part. The advantage of this method is that the internal pressure within the mold is increased locally but not throughout the mold as the solidified battery part does not transmit pressure forces in the same manner as if it were a liquid.

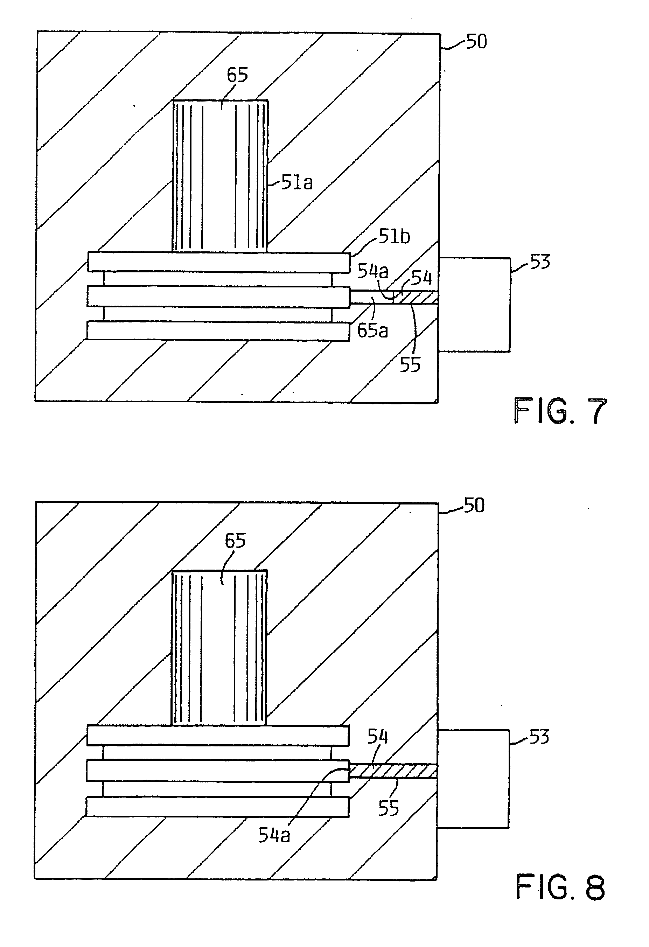

Figure 7 is a cross-sectional view showing a portion of a mold 50 and a piston 54 that is positioned having its end surface 54a spaced from the non-electrical contact surface 51b. A pressure cast solidified battery terminal 65 is shown therein with a solidified extension 65a extending outward from the battery terminal 65 to the end surface 54a of piston 54. In this condition, the extension 65a has solidified as an integral part of the battery terminal. Battery terminal 65 having been formed by a pressure cast process can include cracks and tears. In order to remove any tears or cracks the piston 54 is driven toward battery terminal post 65 with sufficient force to force the material in extension 65a into the battery terminal and thereby mechanically deform the battery terminal to a condition wherein the tears and cracks are removed.

Figure 8 illustrates the driving of the piston to a condition flush with the surface of the battery terminal. By driving the piston end 54a to a condition flush with the battery terminal 65, the battery terminal is provided with a continuous surface. Consequently, the method illustrated by Figure 8 can be used on either the non-electrical contact surface or the electrical contact surface as the finished surface remains flush with the adjacent surface.

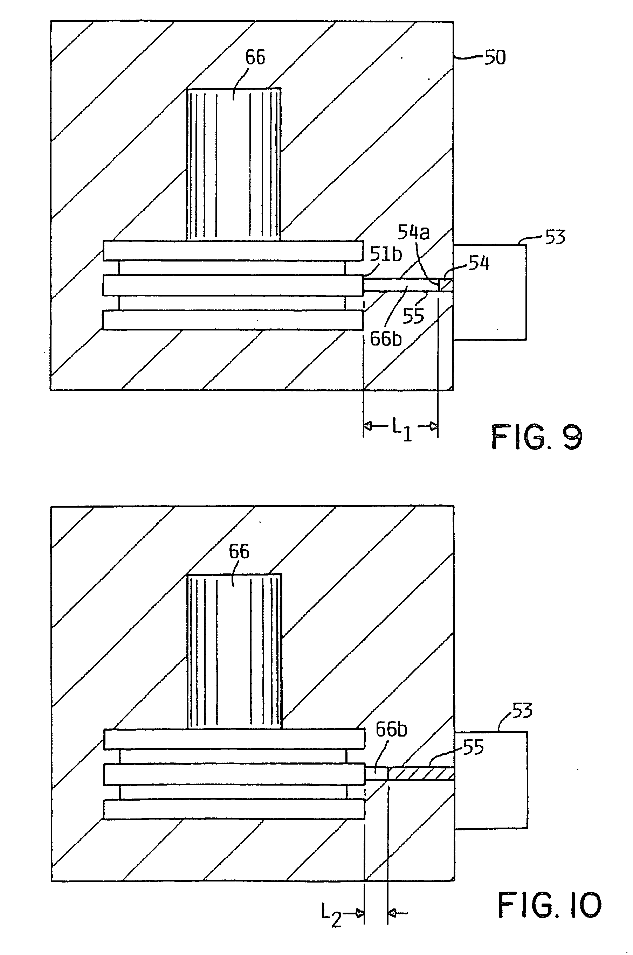

Figure 9 is a cross-sectional view showing a portion of a mold 55 with a solidified battery terminal 66 therein. A piston 54 is positioned having its end surface 54a spaced from the mold cavity end surface 51b. In the condition shown, a solidified cylindrical extension of length L₁ extends from battery terminal 66.

Figure 10 is a cross-sectional view of the mold in Figure 9 showing the end of the piston driven to a condition which is also spaced from the end surface of the mold cavity. That is the piston has been driven in passage 55 until the extension 66b has been shortened to length L2. The purpose of mechanically reducing the volume of the solidified battery terminal 66 is to cold form at least a portion of the metal in the battery terminal to thereby relieve any cracks or tears in the pressure cast battery terminal. The method illustrated in Figures 9 and 10 requires less precession in the piston movement to deform the metal into a shape free of cracks and tears. For example, the amount of force applied to piston 53 could be the determining factor of the travel of the piston rather than the length of piston travel determining the pressure of deformation on the battery terminal.

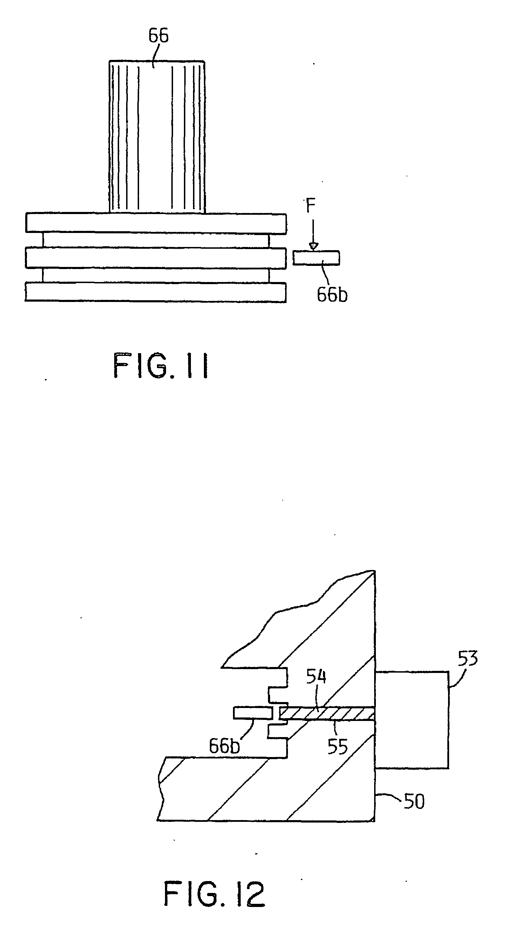

Figure 11 is a view of a battery terminal of Figure 10 with the pressure cast extension 66b being schematically shown as being sheared off. In practice the removal of the battery terminal 66 from the mold may cause the extension 66b to shear off and remain in cylindrical passage 55. That is, the extension 66b is sufficiently small in diameter so that the extension can be broken with the battery terminal removal force.

To illustrate the removal of the extension 66b from the mold, reference should be made to Figure 12 which is a partial cross-sectional view of the piston of Figure 10. Piston 53 is shown driving the pressure cast extension 66b from the passage 55. Thus with the method illustrated in Figures 9-12 one can leave an extension on the cast battery terminal and then break the extension off during the removal of the battery terminal. The use of the piston 54 allows one to clear the passage 55 for the next casting.

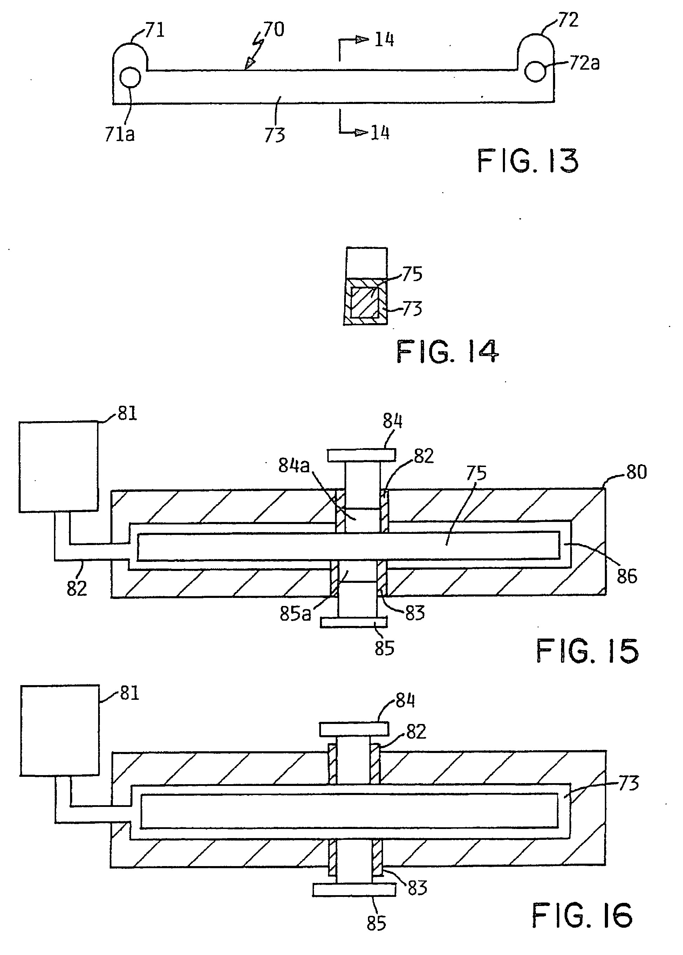

Figure 13 is a front view of a two-metal battery connector 70 having an intermediate member 73 with a first connector end 71 having an opening 71 a and a second connector end 72 having an opening 72a therein. The exterior of connector 70 is lead.

Figure 14 is a cross-sectional view taken along lines 14-14 of Figure 13 showing the extension connector 73 of lead and the inner core 75 which is a different metal such as copper. Core 75 is surrounded by a lead sheathing that has been pressure cast thereon.

To illustrate the pressure casting of the battery part of Figure 13, reference should be made to Figure 15 which is a cross-sectional view of a mold 80 and a holding apparatus for pressure casting the battery connector of Figure 13. Holding apparatus comprises a pair of retractable members 82 and 83 that are oppositely disposed with the core 75 being supported therebetween in a condition that leaves an envelope of space 86 around core 75 to allow for molten metal to flow therein. Retractable members 82 and 83 are held in pressure contact with core 75 through means not shown. A source of pressured lead 81 is located in fluid communication with mold cavity 86 through feed runner 82. In the condition shown, the mold 80 is ready to receive molten lead. In the condition to receive molten lead a first piston 84 is located in a retracted condition to provide a mold space 84a in front of the end of piston 84 and similarly, piston 85 is located in a retracted condition to provide mold space 85a in front of the end of piston 85. During the pressure casting of connector 70, the molten lead will be forced into void 86 and into the space 85a and 85b. Once the lead in the mold has solidified to support core therein, the retractable members 82 and 83 are retracted leaving the pressure cast lead to support the core therein. The withdrawn of the retractable members 82 and 83 will leave a void in the solidified material in mold 80. In order to fill the voids produced by retraction of retractable members 82 and 83, the pistons 84 and 85 are driven inward to a condition flush with the exterior of the remaining portion of the mold.

Figure 16 is cross-sectional view of a mold and holding apparatus of Figure 15 with a pair of retractable members 82 and 83 in the retracted position and the driving pistons 84 and 85 in the extended position. In this condition, the metal present in region 85a and 84a of figure 14 has been forced into the voids produced by the withdrawal of retractable members 82 and 83. Consequently, the connector 70 can be formed in a pressure cast process with the completion of the battery connector accomplished with a deformation of the pressure cast lead to thereby produce a finished product.

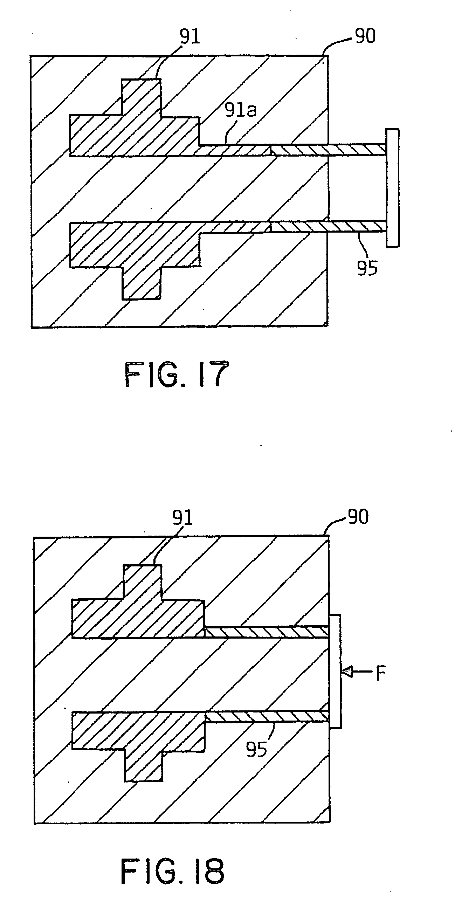

Figure 17 is a cross-sectional view of an alternate embodiment of a pressure cast part 91 that has formed a cylindrical extension 91a thereon. The length of the cylindrical extension 91a is limited by the end of an annular drive punch 95.

Figure 18 shows the battery part of Figure 17 with the annular drive punch 95 driven into the solidified extension 91a to cold form the battery part 91 free of cracks and voids. Thus with the present process, one can pressure cast a variety of battery parts and through a process of decreasing the volume during either the pre-solidification state or the solidified state, one can produce a battery terminal that is free of tears and cracks.

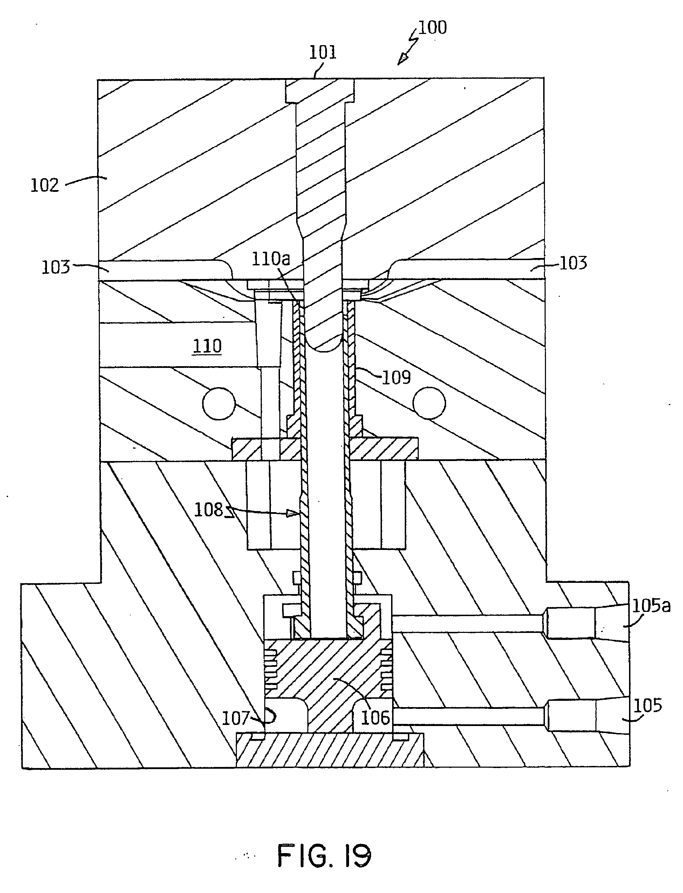

Figure 19 shows a mold 100 with a core pin 101 and slidable collar 108 for pressure casting a battery part which is defined by cavity 110 which includes the annular cavity surrounding core pin 101. In operation of the mold of Figure 19, molten lead under pressure enters runners 103 to fill the battery part cavity 110. A slidable collar 108 is located within fixed collar 109 with the end of collar 108 and the inner portion of collar 109 defining a portion of the battery part. Casting of the battery part with the collars in the position shown produces an annular extension of the battery part in the battery cavity portion defined by 110a. In order to provide the volume contraction of the battery part to provide a battery part free of cracks and tears, there is included a piston 106 that is slidable in chamber 107. A first port 104 receives a first fluid and a second port 105 receives a second fluid. When the pressure in port 105 is increased rapidly, it forces piston 106 upward which drives collar 108 upward into the battery cavity region 110a which compresses the annular lead extension located therein by reducing the volume available for the lead extension. In the mold shown in Figure 19, the collar 108 can be driven upward to reduce the volume while the lead is in the transition state between liquid and solid or when the lead has cooled. If the lead has cooled to solid state before the slideable collar 108 is driven upward the lead is cold formed into a battery part The piston 106 can be lowered again by increasing the pressure in port 104 and reducing the pressure in port 105, thus withdrawing the piston 106 from the drive collar 108.

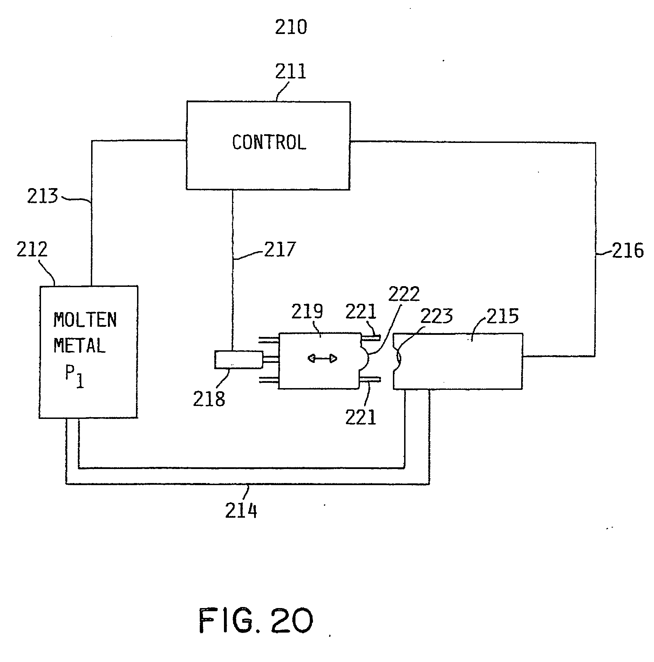

Figure 20 shows a partial schematic of my closed system 210 for pressure casting lead articles while maintaining the molten lead in the runners in a molten state. Closed system 210 for molding lead articles under pressure incudes a source of pressurizeable molten lead 212, a control module 211, a runner 214 for directing molten lead to a housing 215 which includes a shut-off valve that controls the flow of molten lead into a mold 219. Control module 211, which may be a computer with appropriate software, connects to the source of molten lead 212 through a lead 213. Similarly, control module 211 connects to a power cylinder 218 through a lead 217. A third lead 216 connects control module 211 to a power cylinder located in housing 215.

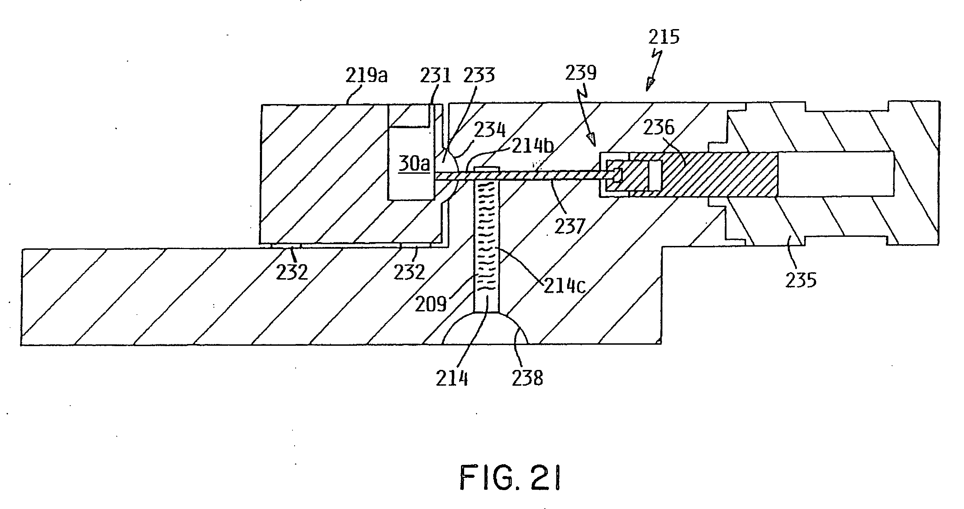

In the embodiment shown in Figure 21, mold 219a includes a bleed chamber 231 for allowing air to escape from the mold cavity therein. Bleed chambers are known in the art and generally comprise a small necked passage that allows air to escape from the mold cavity as the molten lead is injected into the mold cavity. The passage has a small neck to allow air to escape but when lead enters the small necked bleed passage it quickly cools and solidifies thereby closing off the passage and preventing the escape of molten lead.

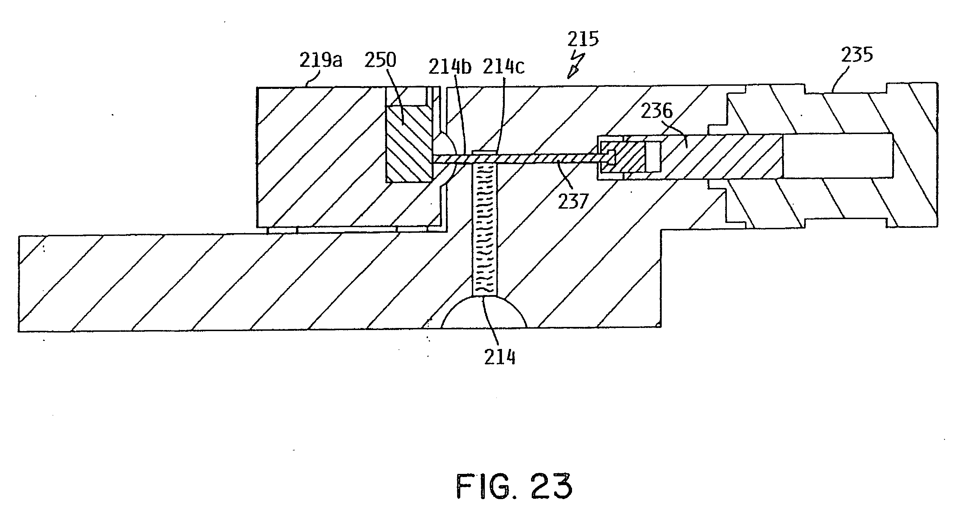

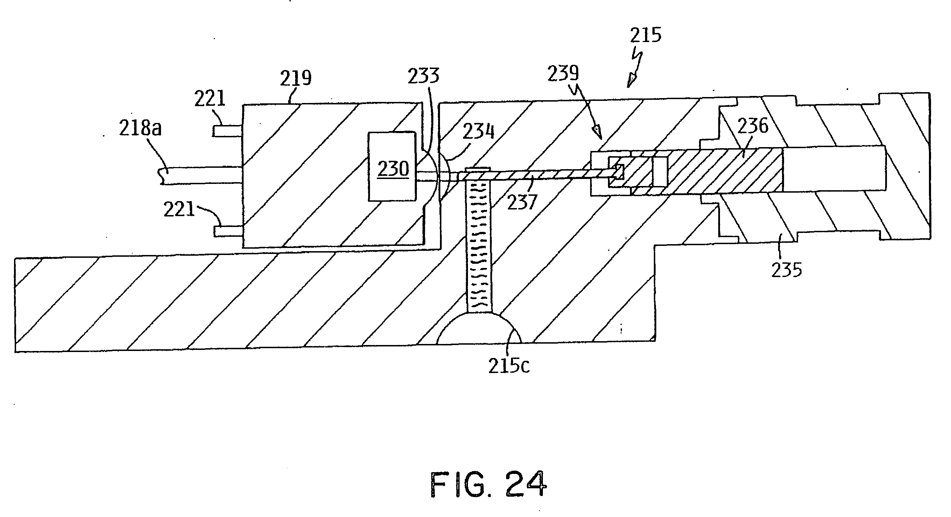

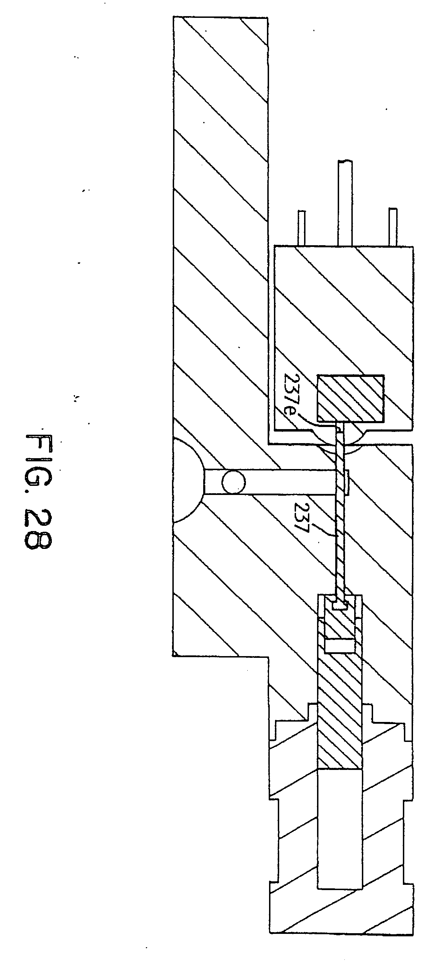

Mold 219 is shown mounted on a pair of rails 221 to permit one to slide mold 219 with connector 222 into temporary engagement with a connector 223 on housing 215 through a power cylinder 218. The embodiment as described in Figure 21 with housing 215 in section is shown in further detail in Figures 24-28. In a further embodiment illustrated in Figures 1-23 the mold connector 222 remains in contact with connector 223 during the molding process.

With the closed system operation of the present invention, the molten lead is maintained in a molten state by having the housing 215 , which is usually iron, at a temperature above the melting point of lead This ensures that the molten lead therein will remain in a molten state. However, in order to cast a product, the mold 219 must be maintainable at sufficiently low temperature so that molten lead injected into mold 219 can solidify therein. In order to ensure that the mold is at sufficiently low temperature, either of two systems can be used to minimize heat transfer between the mold 219 and the housing 215. One system may be suitable for molds that can rapidly dissipate excess heat and the other system may be more suitable for molds that cannot dissipate heat as rapidly.

In the embodiment shown in Figures 21 and Figures 24-28 the mold is temporarily maintained in contact with the housing 215 by sliding mold 219 away from housing 215 during a portion of the molding cycle thereby limiting the amount of conductive heat transfer from the housing 215 to mold 219 by limiting the time of contact between housing 215 and mold 219. In the embodiment shown in Figures 2-4 thermal insulation is used to thermally isolate the mold from the housing 215 to thereby limit the amount of heat transfer from housing 215 to mold 219.

The housing 215 and mold 219a of an alternate embodiment are shown in cross-section in Figures 2-4. Mold 219a includes a mold cavity 230 with a bleed passage 231 connected thereto. Bleed passages are known in the art and are generally narrow passages that connect to the mold cavity to allow air to escape from the mold as the molten lead is injected into the mold. As the passage is narrow, the entrance of molten lead therein is quickly cooled thereby causing the passage to be blocked by the molten lead. If it is desired to have the cast part free of small air pockets, one can use an air bleed passage, on the other hand if small air pockets are acceptable in the cast part the bleed passage need not be used at all. Mold 219a is shown with connector 233 in engagement with connector 234 and the mold 219a thermally isolated from housing 215 by insulation pads 232.

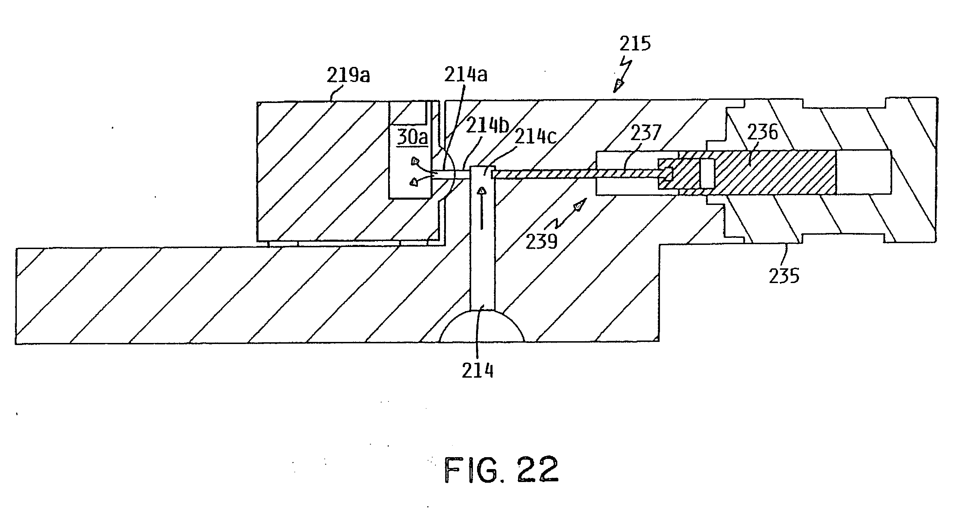

Housing 215 includes a power cylinder 235 that includes a slidable piston 236 that can be powered in either direction by a signal from control module 211. Connected to slidable piston 236 is a cylindrical retractable and extendible member 237 that coacts with runner 214 to form a shut off valve 239 to control the injection of molten lead into mold cavity 230. Runner 214 is shown in Figure 22 to include a cylindrical chamber 214c, a smaller cylindrical passage 214b located at a right angle to chamber 214c and a further cylindrical passage 214a located in mold 219a which connects to mold cavity 230. Housing 215 including shut off valve 239 are maintained at sufficiently high temperature through an external heat source (not shown) so that molten lead located therein will remain in the molten state.

Shut-off valve 239 has a closed position, which is illustrated in Figure 21, to prevent molten lead from flowing out of runner 214 and an open position, which is illustrated in Figure 22, for allowing molten lead to flow into mold cavity 230a. In the closed position as shown in Figure 21, the slidable piston or cylindrical member 237 seals off runner passage 214b to prevent further molten lead from entering mold cavity 230a. The seal is obtained by a close tolerance fit between the outside diameter of member 237 and the inside diameter of runner passageway 214b. In the open position, which is shown in Figure 22, the molten lead is allowed to flow through runner passage 214c, 214b, and 214a and into cavity 30a as indicated by the arrows. In this condition, the molten lead is injected under pressure into cavity 30a which is generated by a slidable piston in an immersion housing 261. In order to provide smooth operation, the mold and the housing include mating members for providing a continuous inline passage between the mold cavity and the housing, and an alignment guide such as a beveled annular edge on either the end of cylindrical member 237 or the passageway 214b to ensure that any misalignment of the cylindrical member with the passageway is self correctable.

Figures 24-28 show the embodiment wherein the mold 219 is slid into temporary engagement with the housing 215. Referring to Figure 24, mold 219 is shown setting on rails 221 with mold 219 connected to an extension and retractable member 218a which is driven by the two way power cylinder 218 shown in Figure 21. The mold 219 is shown without an air bleed passage. Figure 24 shows the mold in a position to minimize heat transfer between housing 215 and mold 219. In this condition, connector 233 and connector 234 are in disengagement and mold 219 is spaced from housing 215 to thereby limit conduction heat transfer from housing 215 to mold 219. In this condition the cylinder member 237 is shown sealing the runner 214 to prevent molten lead from entering mold cavity 230.

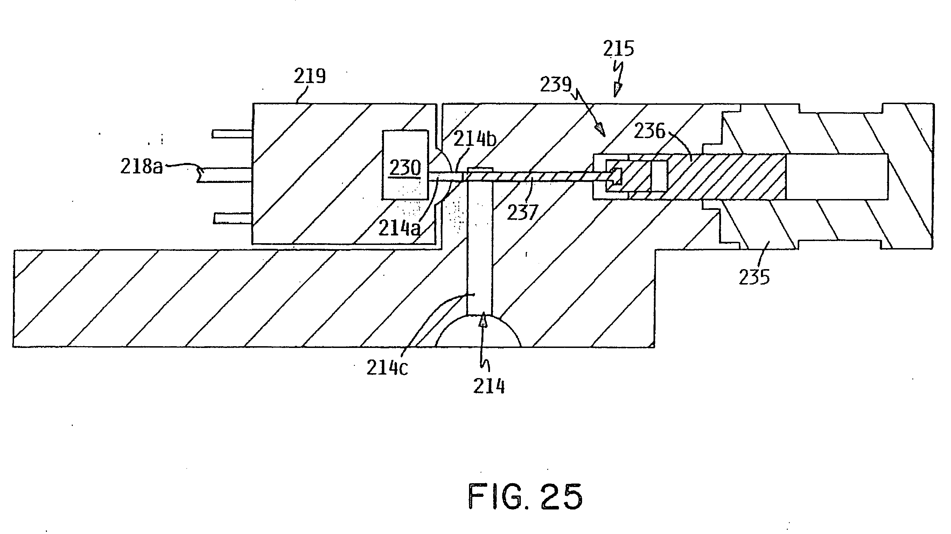

Figure 25 shows that mold 219 has been brought into engagement with housing 215 through extension of member 218a, which causes mold 219 to slide along rails 21. In this condition the mold cavity 230 is ready to receive molten lead through the runner 214a, however, the cylindrical member 237 is maintaining molten lead within the runner 214 by the close tolerance fit between cylindrical member 237 and cylindrical runner passage 214b. The step of closing the runner includes positioning piston 237 sufficiently far so as not to be in engagement with the mold but sufficiently far so as to maintain the piston in a blocking condition in the runner to thereby prevent molten lead from escaping from the runner.

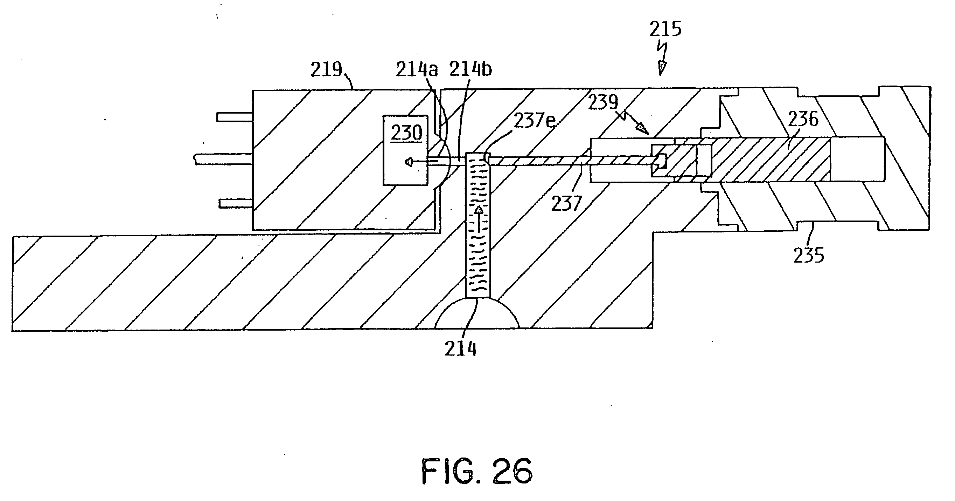

Figure 26 shows shut-off valve 239 in the open position with the molten lead flowing into mold cavity 230. Note, the end 237e of cylindrical member 237 is positioned in a retracted condition so as not to block flow of molten lead into passage 214b.

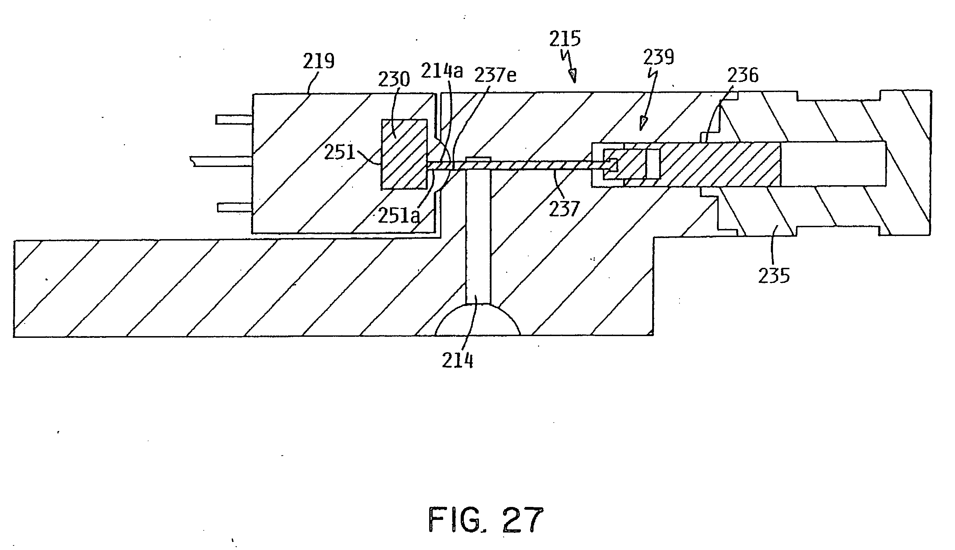

Figure 27 shows the shut-off valve 239 in the closed condition with end 237e extending into runner passage 214b to seal off the passage 214b and prevent further molten lead from flowing into cavity 230. The molten lead 251 is in a state of solidifying in cavity 230 and the lead 251 includes a neck 251 a that extends into runner passage 214a. A feature of the present invention is that one can introduce the intensification process to the forming of the lead part in cavity 230.

In the intensification process, the state of molten lead is monitored so that when the molten lead enters a transformation stage from liquid-to-solid, the volume of the mold available for the lead to solidify therein is quickly reduced to thereby cause the molten lead to flow into the remaining volume while one maintains increased pressures on the molten lead. As the molten lead solidifies under the reduced volume and increased pressure, it produces a lead part that is substantially free of both tears and cracks. In still another variation of the process, the lead part is allowed to solidify in the mold, but before removal of the lead part from the mold a piston is driven into the lead part with sufficient force so as to at least partially cold form a portion of the lead part to thereby produce a lead part that is free of cracks and tears. Thus, it is apparent that with the present process of a closed system the cylindrical member 237e is configured to not only shut off the flow of molten lead but also can be driven into the solidifying lead in mold cavity 230 to increase or intensify the pressure to produce a lead part that is substantially free of both tears and cracks. Thus the shut-off valve can both control the flow of molten lead to the mold cavity and intensify the pressure of the lead in the mold.

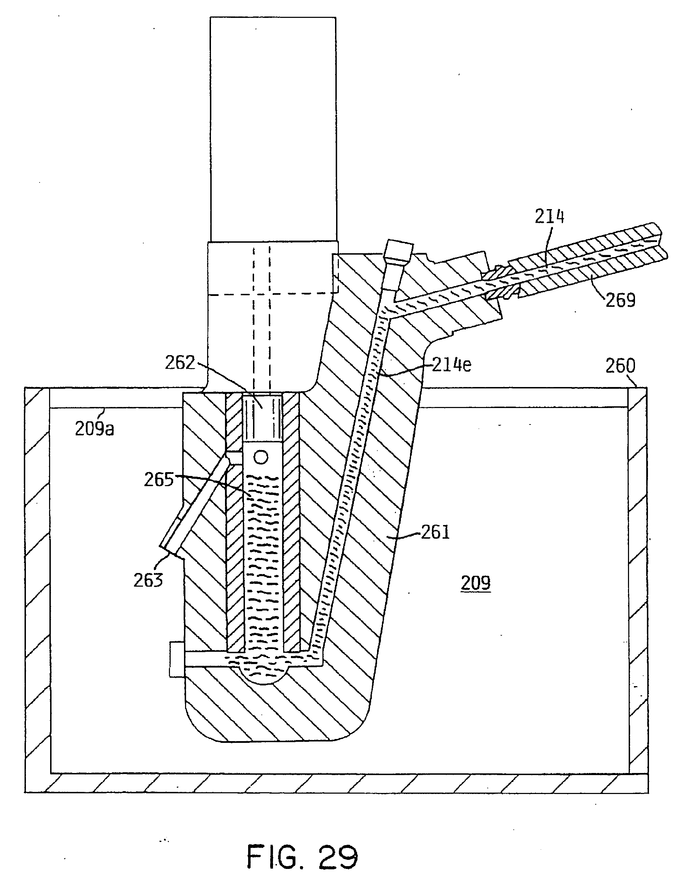

While the transfer of molten lead from the runner 214 to the mold 219 had been described, the closed system also includes a source of pressurized lead 212. The source of pressurized lead is shown in Figures 29-13.

Figure 29 shows a source of pressurizeable molten lead 212 including a vat 260 of molten lead 29 having an immersion housing 261 therein with a slidable piston 262 for increasing the pressure of the molten lead in the immersion housing 261 and runner 214. The immersion housing 261 has an inlet 263 which is maintainable in the lower portion of the vat 260 of molten lead to prevent air from being drawn into the immersion housing when a fresh charge of molten lead is brought into the housing. That is the inlet 263 is located below the top 229a of the vat of molten lead. Immersion housing 261 is known in the art and is used to force lead from a vat of molten lead. In the present system, the immersion housing is coupled to the mold cavity through a closed system that enables a charge of lead to be removed from the system or added to the closed system without disrupting the condition of the molten lead in the system.

Figure 29 shows the piston 262 at the beginning of the cycle with molten lead 229 located in chamber 265. As lead is substantially incompressible, the forcing of piston 262 downward forces molten lead trough runner passage 214e and runner 214. Runner 214 comprises a passage in a housing that is maintained at a temperature to maintain the lead in a molten state and provides an airtight passageway between immersion housing 261 and mold 219.

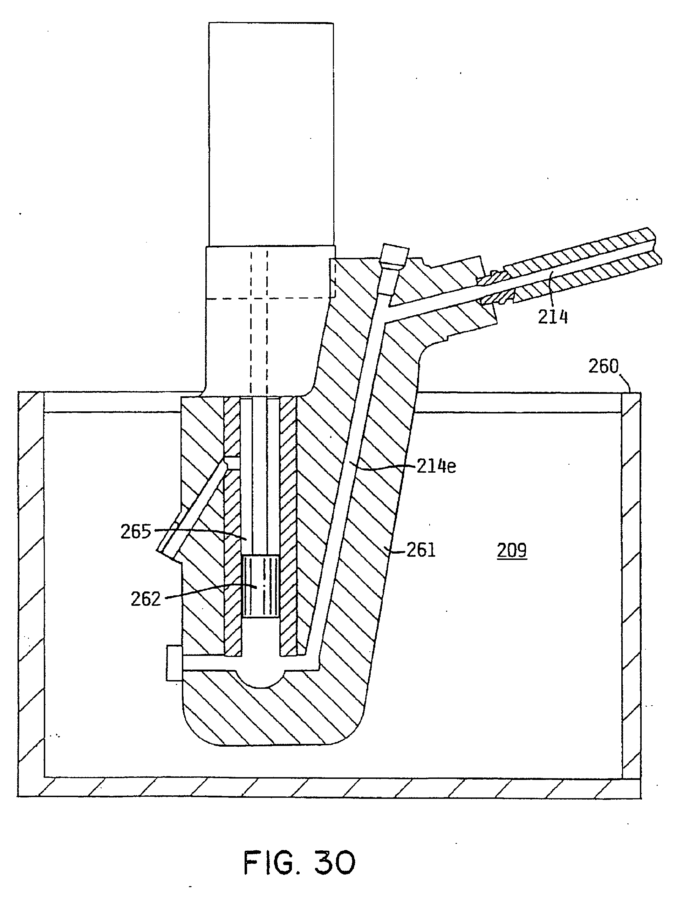

Figure 30 shows piston 262 in the compressed position where the lead 29 in the runners 214 has been forced into the cavity of mold 219. After compressing the lead to the position shown in Figure 30 the shut-off valve 235 is closed by extending cylindrical member 239 into the passage 214b. Consequently no air can get into the runners. By maintaining the appropriate pressure on the lead in the immersion housing, one can maintain the pressure of the lead in the runners at a fixed level.

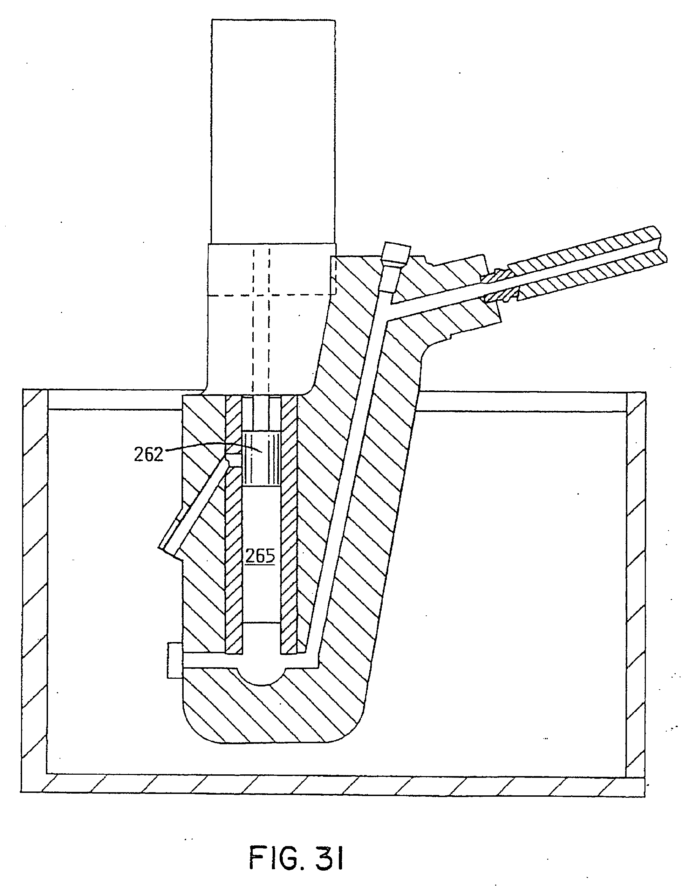

Figure 31 illustrates what happens in the next step as the piston 262 is raised by a signal from the control module. As the piston is lifted upward, a vacuum is formed in the system.

That is the runners now have a negative pressure as the piston 262 is brought upward to expand the volume of the system without introducing air or molten lead into the system.

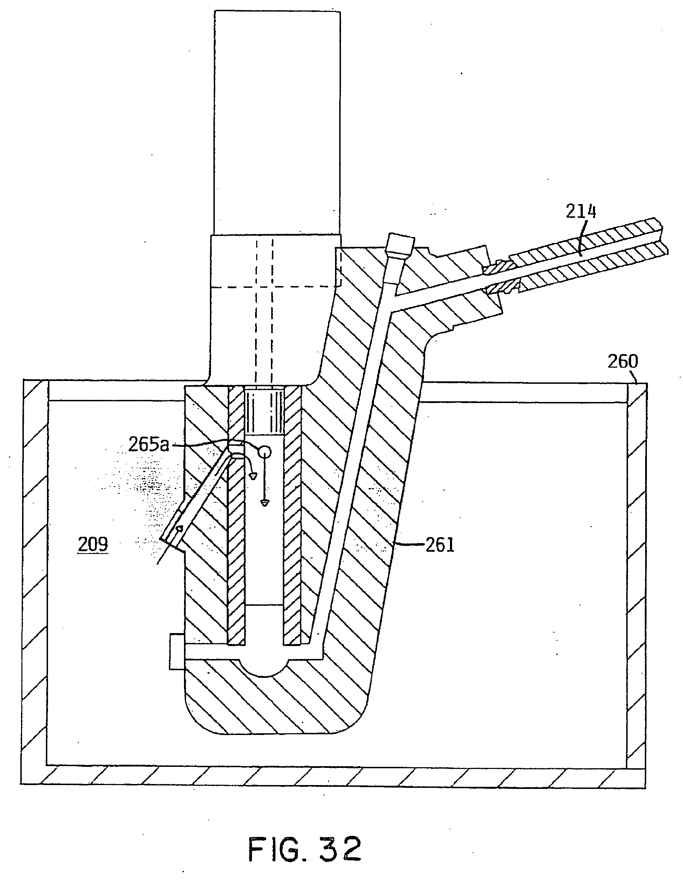

Figure 32 shows the piston drawn up slightly further to expose the inlets 265a which allows molten lead 29 to be drawn into chamber 265 through the vacuum within the system. In this condition the system has received a fresh charge of molten lead and is ready to force a charge of molten lead into the mold cavity.

Thus with the present system I have provided a method of pressure casting a lead article comprising the steps of 1) increasing the pressure of a source of molten lead sufficiently to force the molten lead to flow in a liquid state into a mold cavity 2) maintaining the mold cavity at a sufficiently low temperature so that when molten lead is injected therein the molten lead solidifies and 3) closing a runner to mold cavity 219 while maintaining molten lead 229 in a closed system to prevent entrapment of air in the molten lead so that a fresh charge of molten lead can be introduced into the closed system by retracting piston 262.

The closed system shown for molding lead articles without the introduction of air includes a control module 211 which can automatically control the sequence of system operations. The system further includes a source of pressurizeable molten lead 212 and a runner 214 that connects to a mold 219 having a mold cavity 230. The mold is maintainable at sufficiently low temperature so that a charge of molten lead located in mold cavity can quickly solidify to thereby form a solidified casting. In order to provide for continuous production of cast parts the housing 215 includes a runner 214 for flow of molten lead therethrough and for maintaining the lead in a molten state either through heating of the runner with an external heater or by maintaining insulation about the runner or housing. In either case, the runner is maintainable at sufficiently high temperature to continuously maintain molten lead therein in a molten state so that the mold cavity can be refilled with a fresh charge of molten-lead from the runner when a solidified casting is removed. In order to start or stop the flow of molten lead to the mold, shut-off valve 239 has an open position that allows molten lead to flow into the mold cavity 230 and a closed position that prevents molten lead from flowing out of the runner 214. During the molding process as the lead in the mold cavity solidifies, one can intensify the pressure by driving cylinder member 237 of the shut-off valve 239 along the runner and toward the mold cavity to further increase the pressure in what is referred to as an intensification position. Once the molded part is released from the mold, the process is repeated.

It will be appreciated that with the present system not only can lead be maintained in a molten state, but that the entire system for handling the molten lead need not be built to withstand the pressure of intensification as only the mold experiences the high intensification pressures.

While the system has been described with respect to use with lead it is envisioned that the system can be used with other metals.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A method of pressure casting a lead battery terminal to inhibit the formation of cracks and tears in the battery terminal comprising the steps of:
evacuating a battery terminal cavity (20, 51, 30a, 230) to remove air therefrom; injecting molten lead (12, 212) under pressure into the battery terminal cavity (20, 51, 30a, 230); and
reducing the volume of the battery terminal cavity (20, 51, 30a, 230) while the molten lead (12, 212) is in a liquid-to-solid transformation stage to cause the molten lead (12, 212) to flow into the reduced volume before the molten lead (12, 212) solidifies thereby inhibiting the formation of cracks and tears in the battery terminal.

2. The method according to claim 1 therein:
the air is removed from the battery terminal cavity (20, 51, 30a, 230) by a vacuum source connected to said battery terminal cavity (20, 51, 30a, 230) prior to supplying molten lead (12, 212) to said battery terminal cavity (20, 51, 30a, 230);
the molten lead (12, 212) is injected from a source of pressurized molten lead (12, 212) to a mold (11, 50, 219, 219a) having the said battery terminal cavity (20, 51, 30a, 230) therein, said mold (11, 50, 219, 219a) including a runner (14, 214) for supplying the molten lead (12, 212) to said battery terminal cavity (20, 51, 30a, 230); and
the volume of the battery terminal cavity (20, 51, 30a, 230) is reduced by a pressure responsive piston located in a hot spot of the mold (11, 50, 219, 219a), said pressure responsive piston (23, 54,237) being movable into said mold (11, 50, 219, 219a).

3. The method of claim 2 further comprising the steps of:
monitoring the pressure of the lead (12, 212) as the molten lead (12, 212) is supplied to said battery terminal cavity (20, 51, 30a, 230) by a pressure sensor mounted in said mold (11, 50, 219, 219a);
when the molten lead (12, 212) in said battery terminal cavity (20, 51, 30a, 230) enters a liquid-to-solid transformation range wherein the molten lead (12, 212) is no longer molten but not yet solid, a control unit (14) activates a driver (13) to drive a piston (23, 54, 237) into the runner (14, 214) at sufficient velocity to thereby simultaneously shutting off the supply of molten lead (12, 212) to said battery terminal cavity (20, 51, 30a, 230) and compressing the molten lead (12, 212) in the battery terminal cavity (20, 51, 30a, 230) before the molten lead (12, 212) has solidified, to thereby produce a pressure cast battery terminal substantially free of cracks and tears.

4. The method of claim 2 wherein the vacuum source is connected to a cold spot in the battery terminal cavity (20, 51, 30a, 230) so that the molten lead (12, 212) solidifies in the cold spot before solidifying in the remaining portion of the battery terminal cavity (20, 51, 30a, 230) to thereby prevent molten lead (12, 212) from entering the vacuum source.

5. The method of claim 2 wherein the piston (23, 54, 237) is driven sufficiently far so that the piston (23, 54, 237) forms a continuous portion of the battery terminal cavity (20, 51, 30a, 230) that the battery terminal cast therein requires no further finishing after removal from said battery terminal cavity (20, 51, 30a, 230).

## Patentansprüche

1. Ein Verfahren zum Druckgießen einer Bleibatterieklemme zum Hemmen der Bildung von Brüchen und Rissen in der Batterieklemme, das folgende Schritte umfasst:
Entleeren eines Batterieklemmen-Hohlraums (20, 51, 30a, 230), um Luft daraus zu entfernen,
Einspritzen von geschmolzenem Blei (12, 212) unter Druck in den Batterieklemmen-Hohlraum (20, 51, 30a, 230); und
Reduzieren des Volumens des Batterieklemmen-Hohlraums (20, 51, 30a, 230), während das geschmolzene Blei (12, 212) sich in einem Umwandlungsstadium von flüssig zu fest befindet, um zu bewirken, dass das geschmolzene Blei (12, 212) in das reduzierte Volumen fließt, bevor das geschmolzene Blei (12, 212) verfestigt wird, wodurch die Bildung von Brüchen und Rissen in der Batterieklemme verhindert wird.

2. Das Verfahren gemäß Anspruch 1, worin:
die Luft von einer Vakuumquelle, die mit dem Batterieklemmen-Hohlraum (20, 51, 30a, 230) verbunden ist, aus dem Batterieklemmen-Hohlraum (20, 51, 30a, 230) entfernt wird, bevor geschmolzenes Blei (12, 212) in den Batterieklemmen-Hohlraum (20, 51, 30a, 230) eingebracht wird;
das geschmolzene Blei (12, 212) aus einer Quelle für unter Druck gesetztes geschmolzenes Blei (12, 212) in eine Form (11, 50, 219, 219a) eingespritzt wird, in der sich der Batterieklemmen-Hohlraum (20, 51, 30a, 230) befindet, wobei die Form (11, 50, 219, 219a) einen Angusskanal (14, 214) zum Einführen des geschmolzenen Bleis (12, 212) in den Batterieklemmen-Hohlraum (20, 51, 30a, 230) einschließt, und
das Volumen des Batterieklemmen-Hohlraums (20, 51, 30a, 230) von einem druckabhängigen Kolben reduziert wird, der sich in einer heißen Stelle der Form (11, 50, 219, 219a) befindet, wobei der druckabhängige Kolben (23, 54, 237) in die Form (11, 50, 219, 219a) bewegt werden kann.

3. Das Verfahren gemäß Anspruch 2, das weiter folgende Schritte umfasst:
Überwachung des Drucks des Bleis (12, 212), während das geschmolzene Blei (12, 212) dem Batterieklemmen-Hohlraum (20, 51, 30a, 230) zugeführt wird, durch einen in der Form (11, 50, 219, 219a) montierten Drucksensor,
wenn das geschmolzene Blei (12, 212) in dem Batterieklemmen-Hohlraum (20, 51, 30a, 230) in ein Umwandlungsstadium von flüssig zu fest eintritt, in dem das geschmolzene Blei (12, 212) nicht mehr geschmolzen, aber noch nicht fest ist, aktiviert eine Steuereinheit (14) einen Antrieb (13), um einen Kolben (23, 54, 237) in den Angusskanal (14, 214) zu treiben, mit ausreichender Geschwindigkeit, um **dadurch** gleichzeitig die Zufuhr von geschmolzenem Blei (12, 212) in den Batterieklemmen-Hohlraum (20, 51, 30a, 230) zu stoppen und um das geschmolzene Blei (12, 212) im Batterieklemmen-Hohlraum (20, 51, 30a, 230) zu komprimieten, bevor das geschmolzene Blei (12, 212) sich verfestigt hat, um so eine druckgegossene Batterieklemme zu erzeugen, die im Wesentlichen frei von Brüchen und Rissen ist.

4. Das Verfahren gemäß Anspruch 2, worin die Vakuumquelle mit einer kalten Stelle im Batterieklemmen-Hohlraum (20, 51, 30a, 230) verbunden ist, so dass das geschmolzene Blei (12, 212) in der kalten Stelle verfestigt wird, bevor es sich im restlichen Teil des Batterieklemmen-Hohlraums (20, 51, 30a, 230) verfestigt, um so zu verhindern, dass geschmolzenes Blei (12, 212) in die Vakuumquelle eindringt.

5. Das Verfahren gemäß Anspruch 2, worin der Kolben (23, 54, 237) weit genug getrieben wird, so dass der Kolben (23, 54, 237) einen kontinuierlichen Abschnitt des Batterieklemmen-Hohlraums (20, 51, 30a, 230) bildet, so dass die darin gegossene Batterieklemme nach der Entnahme aus dem Batterieklemmen-Hohlraum (20, 51, 30a, 230) keine Nachbearbeitung benötigt.

## Revendications

1. Procédé de coulée sous pression d'une borne de batterie en plomb pour empêcher la formation de fissures et de criques dans la borne de batterie comprenant les étapes de :
- faire le vide dans une cavité de borne de batterie (20, 51, 30a, 230) pour éliminer l'air de celle-ci ;
- injecter du plomb fondu (12, 212) sous pression dans la cavité de borne de batterie (20, 51, 30a, 230) ; et
- réduire le volume de la cavité de borne de batterie (20, 51, 30a, 230) alors que le plomb fondu (12, 212) se trouve dans une étape de transformation liquide-solide pour entraîner le plomb fondu (12, 212) à s'écouler dans le volume réduit avant la solidification du plomb fondu (12, 212) en empêchant ainsi la formation de fissures et criques dans la borne de batterie.

2. Procédé selon la revendication 1, dans lequel :
- l'air est retiré de la cavité de borne de batterie (20, 51, 30a, 230) par une source de vidé reliée à ladite cavité de borne de batterie (20, 51, 30a, 230) avant de fournir le plomb fondu (12, 212) à ladite cavité de borne de batterie (20, 51, 30a, 230) ;
- le plomb fondu (12, 212) est injecté à partir d'une source de plomb fondu pressurisé (12, 212) vers un moule (11, 50, 219, 219a) ayant ladite cavité de borne de batterie (20, 51, 30a, 230) dans celui-ci, ledit moule ((11, 50, 219, 219a) incluant un canal de coulée (14, 214) pour fournir le plomb fondu (12, 212) à ladite cavité de borne de batterie (20, 51, 30a 230) ; et
- le volume de la cavité de borne de batterie (20, 51, 30a, 230) est réduit par un piston sensible à la pression situé en un point chaud du moule (11, 50, 219, 219a), ledit piston sensible à la pression (23, 54, 237) pouvant se déplacer dans ledit moule (11, 50, 219, 219a).

3. Procédé de la revendication 2 comprenant de plus les étapes de :
- surveiller la pression du plomb (12, 212) quand le plomb fondu (12, 212) est fourni dans ladite cavité de borne de batterie (20, 51, 30a, 230) par un capteur de pression monté dans ledit moule (11, 50, 219, 219a) ;
- quand le plomb fondu (12, 212) dans ladite cavité de borne de batterie (20, 51, 30a, 230) entre dans un domaine de transformation liquide-solide dans lequel le plomb fondu (12, 212) n'est plus fondu mais pas encore solide, une unité de commande (14) actionne un dispositif d'entraînement (30) pour entraîner un piston (23, 54, 237) dans le canal de coulée (14, 214) à une vitesse suffisante pour arrêter ainsi simultanément l'alimentation de plomb fondu (12, 212) vers ladite cavité de borne de batterie (20, 51, 30a, 230) et comprimer le plomb fondu (12, 212) dans la cavité de borne de batterie (20, 51, 30a, 230) avant la solidification du plomb fondu (12, 212), pour produire ainsi une borne de batterie coulée sous pression sensiblement dépourvue de fissures et de criques.

4. Procédé de la revendication 2, dans lequel la source de vide est reliée à un point froid dans la cavité de borne de batterie (20, 51, 30a, 230) de sorte que le plomb fondu (12, 212) se solidifie dans le point froid avant de se solidifier dans la partie restante de la cavité de borne de batterie (20, 51, 30a, 230) pour empêcher ainsi le plomb fondu (12, 212) d'entrer dans la source de vide.

5. Procédé de la revendication 2, dans lequel le piston (23, 54, 237) est entraîné suffisamment loin de sorte que le piston (23, 54, 237) forme une partie continue de la cavité de borne de batterie (20, 51, 30a, 230) et que la coulée de la borne de batterie dans celle-ci ne demande aucune autre finition après le retrait de ladite cavité de borne de batterie (20, 51, 30a, 230).
